# EUROPÄISCHE PATENTSCHRIFT

(11) **EP 0 720 996 B1**
(45) Veröffentlichungstag und Bekanntmachung des Hinweises auf die Patenterteilung: **18.09.2002**
(21) Anmeldenummer: 95120537.6
(22) Anmeldetag: 27.12.1995
(51) Int. Cl.: C08G 63/52, C08G 18/68, C09D 167/06, C09D 175/14

(54) **Polyesterpolyole und ihre Verwendung in Zweikomponenten-Polyurethanlacken**
Polyester polyols and their use in two-component polyurethane coatings
Polyesterpolyols et leur utilisation dans des revêtements en polyuréthane à deux composantes

(30) Priorität: 09.01.1995 DE 19500358
(43) Veröffentlichungstag der Anmeldung: 10.07.1996
(73) Patentinhaber: BAYER AG, 51368 Leverkusen (DE)
(72) Erfinder: Wamprecht, Christian, Dr., D-41472 Neuss (DE); Sonntag, Michael, Dr., D-51519 Odenthal (DE)

(56) Entgegenhaltungen:
- EP-A- 0 036 975
- EP-A- 0 571 829
- EP-A- 0 578 940
- DE-A- 1 769 233
- DE-A- 3 111 023
- DE-A- 4 343 452
- US-A- 4 689 266

## Beschreibung

Die Erfindung betrifft neue, spezielle Polyesterpolyole auf Basis ausgewählter Ausgangsmaterialien und ihre Verwendung als Bindemittelkomponente in Zweikomponenten-Polyurethanlacken (2K-PUR-Lacken), vorzugsweise für die Autoreparatur- und Großfahrzeuglackierung.

Es ist seit langem bekannt, wenig flexible Substrate, wie z.B. Metall oder Holz mit Zweikomponenten-Polyurethanlacken auf Basis von Hydroxylgruppen aufweisenden Polyestern, Polyethern oder Polyacrylaten und organischen Polyisocyanaten zu beschichten. Die resultierenden Lacküberzüge zeichnen sich insbesondere durch eine ausgezeichnete Härte, eine sehr gute Haftung und hohe Wetterbeständigkeit aus. Die chemischen Grundlagen dieser Lacke und Überzüge werden u.a. in "Lackkunstharze", Hans Wagner/Hans Friedrich Sarx, Carl Hanser Verlag, München, Seiten 153 bis 173, 1971, beschrieben.

Die Zweikomponenten-Polyurethanlacke des Standes der Technik, hauptsächlich solche auf Basis von aromatischen Polyesterpolyolen, führen jedoch oft zu Lacküberzügen, deren Vergilbungsneigung, insbesondere bei Bestrahlung mit kurzwelligem UV-Licht, den diesbezüglichen Anforderungen an witterungs-, kreidungs- und vergilbungsbeständige Überzüge in der Autoreparatur- und Großfahrzeuglackierung oft nicht genügt.

Ein typisches Beispiel für solche vergilbungsanfälligen Beschichtungsmittel sind Bindemittel gemäß DE-AS 1 271 867. Zwar zeigen Lacke auf Basis dieser Bindemittel (aromatische Polyesterpolyole/Polyisocyanate auf Basis Hexamethylendiisocyanat) nach 2000 Weather-o-meter-Stunden weder Glanzabfall, Kreidung noch Farbtonänderung, vergilben jedoch deutlich nach 1000 Stunden Bestrahlung mit kurzwelligem UV-Licht.

Eine wesentliche Verbesserung hinsichtlich der Vergilbungsanfälligkeit von 2K-PUR-Lacken bei Bestrahlung mit kurzwelligem UV-Licht kann mit den Polyesterpolyolen, die in der EP-A 0 318 800 und der EP-A 0 571 829 beschrieben sind, erzielt werden. Jedoch sind diese Polyesterpolyole zur Herstellung von 2K-PUR-Lacken für Autoreparatur- und Großfahrzeuglackierung nicht geeignet, weil einerseits die Trocknungszeit (Antrocknung und Durchtrocknung) zu lange ist, andererseits die resultierenden Lackfilme hochelastisch sind und daher nicht die nötige Oberflächenhärte besitzen.

Die EP-A 0 494 442 beschreibt hitzehärtbare Einkomponenten-Beschichtungsmittel, die ebenfalls UV-beständige Lacke liefern. Die bei diesen Beschichtungsmitteln verwendeten Polyesterpolyole sind jedoch für die Anwendung als Polyolkomponente in 2K-PUR-Lacken für Autoreparatur- und Großfahrzeuglackierung nicht geeignet, weil der Verzweigungsgrad, die Härteeinstellung und der OH-Gehalt der Polyester zur gering sind, um schnell trocknende, harte, lösungsmittel- und chemikalienbeständige Lackfilme zu erzielen. Vergleichbare Systeme sind auch aus der EP-A 0036975 und der US-A 4 689 266 bekannt.

Es war daher die der Erfindung zugrundliegende Aufgabe, neue Zweikomponenten-Polyurethanlacke zur Verfügung zu stellen, die den Anforderungen der Praxis genügen und insbesondere für die Autoreparatur- und Großfahrzeuglackierung optimal geeignet sind. Die neuen Lacke sollten insbesondere folgenden Anforderungen gleichzeitig genügen:
1. Vergilbungsfreie Filmoberflächen bei Einwirkung von kurzwelligem UV-Licht: Der Lackfilm muß der Bestrahlung mit kurzwelligem UV-Licht (Wellenlänge < 400 nm) über einen Zeitraum von mindestens 1000 Stunden ohne Vergilbung standhalten.
2. Gute Licht- und Wetterbeständigkeit:
   Der Lackfilm darf nach 2000 Weather-o-meter-Stunden sowie Freibewitterung im Industrieklima weder Glanzabfall, Kreidung noch Farbtonveränderung zeigen.
3. Schnelle Trocknung bei Raumtemperatur:
   Der Lackfilm soll nach ca. 3 h sandtrocken und nach ca. 8 h durchgetrocknet sein (DIN 53150).
4. Sehr gute Lösungsmittel- und Chemikalienbeständigkeit:
   Der Lackfilm muß Einwirkungen üblicher Lacklösungsmittel, wie z.B. Xylol, Butylacetat, Aceton, Methylethylketon, Superbenzin und Chemikalien, wie z.B. Natronlauge, Schwefelsäure, Baumharz, Pankreatin und Teer, unbeschadet überstehen.
5. Hohe Filmhärte und mechanische Widerstandsfähigkeit:
   Der Lackfilm soll möglichst nach wenigen Tagen (3 bis 7) eine hohe Härte (Pendeldämpfung >120 s) erreicht haben und damit kratz- und abriebfest sein.
6. Ausreichende Verarbeitungszeit:
   Frisch angesetzte Lacke müssen mindestens eine Verarbeitungszeit von 6 Stunden haben, d.h., die Viskosität in Form der Auslaufzeit aus einem DIN-4-mm-Becher darf sich innerhalb 6 Stunden nicht verdoppeln.

Wie jetzt überraschenderweise gefunden wurde, gelingt es durch die Verwendung der nachstehend näher beschriebenen, erfindungswesentlichen Polyesterpolyole auf Basis ausgewählter Ausgangsmaterialien als Polyhydroxylkomponente bzw. wesentlichen Teil der Polyhydroxylkomponente in Zweikomponenten-Polyurethanlacken, die gestellte Aufgabe zu lösen und insbesondere vergilbungsresistente, schnell trocknende, harte Lackfilme mit guten Beständigkeitseigenschaften zu erhalten.

Gegenstand der Erfindung sind Polyesterpolyole des Hydroxylzahlbereichs 60 bis 400, die Veresterungsprodukte von
a) einer Alkoholkomponente, bestehend aus
   a1) einer Polyolkomponente, bestehend aus mindestens einem aliphatischen oder cycloaliphatischen, mindestens dreiwertigen Alkohol mit 3 bis 8 Kohlenstoffatomen, gegebenenfalls
   a2) einer Diolkomponente, bestehend aus mindestens einem zweiwertigen, aliphatischen oder cycloaliphatischen Alkohol mit 2 bis 18 Kohlenstoffatomen und gegebenenfalls
   a3) einer Monoolkomponente, bestehend aus mindestens einem einwertigen, aliphatischen oder cycloaliphatischen, gegebenenfalls ungesättigten Alkohol mit 1 bis 18 Kohlenstoffatomen,
   mit
b) einer Carbonsäurekomponente, bestehend aus
   b1) einer Dicarbonsäurekomponente, bestehend aus Itaconsäure, Maleinsäure, bzw. deren Anhydride, Fumarsäure oder Gemischen davon, so daß in den Polyesterpolyolen mindestens 0,6 gew% an über die Komponente b1) eingebauten olefinisch ungesättigte Doppelbindungen vorliegen, gegebenenfalls
   b2) einer Dicarbonsäurekomponente, bestehend aus mindestens einer aliphatischen oder cycloaliphatischen, gesättigten oder ungesättigten Dicarbonsäure mit mindestens 2 Kohlenstoffatomen, bzw. deren möglichem Anhydrid, die von Itaconsäure, Maleinsäure, bzw. deren Anhydride und Fumarsäure verschieden ist und gegebenenfalls
   b3) einer Monocarbonsäurekomponente, bestehend aus mindestens einer aliphatischen oder cycloaliphatischen, gegebenenfalls ungesättigten, Monocarbonsäure mit 1 bis 12 Kohlenstoffatomen und/oder mindestens einem möglichen Anhydrid einer derartigen Säure
   darstellen, dadurch gekennzeichnet, daß bei der Veresterungsreaktion einwertige Aufbaukomponenten a3) in einer Menge von mindestens 10 Mol-%, bezogen auf die Gesamtmenge der Komponente a) oder einwertige Aufbaukomponenten b3) in einer Gesamtmenge von mindestens 10 Mol-%, bezogen auf die Gesamtmenge der Komponente b) mitverwendet worden sind.

Die erfindungsgemäßen Polyesterpolyole unterscheiden sich bezüglich ihrer chemischen Zusammensetzung ganz wesentlich sowohl von den Polyesterpolyolen gemäß EP-A 0 318 800, EP-A 0 494 442 und EP-A 0 571 829 als auch gemäß eigener älterer deutscher Patentanmeldung P 43 43 452.5. Im übrigen sind die erfindungsgemäßen Polyesterpolyole insbesondere für ein Anwendungsgebiet bestimmt, welches in den genannten europäischen Patentanmeldungen nicht angesprochen wird.

Gegenstand der Erfindung ist demzufolge auch die Verwendung der erfindungsgemäßen Polyesterpolyole, gegebenenfalls in Abmischung mit anderen organischen Polyhydroxylkomponenten, als Bindemittelkomponente für Zweikomponenten-Polyurethanlacke, die aliphatische und/oder cycloaliphatische Lackpolyisocyanate sowie gegebenenfalls die in der Polyurethantechnologie üblichen Hilfs- und Zusatzmittel enthalten, insbesondere bei der Herstellung von Lacküberzügen auf Automobilen, Großfahrzeugen, zur Herstellung von Automobilen oder Großfahrzeugen eingesetzten Einzelteilen oder bei der Autoreparaturlackierung.

Gegenstand der Erfindung sind schließlich auch Bindemittelkombinationen, bestehend aus den erfindungsgemäßen Polyesterpolyolen und aliphatischen und/oder cycloaliphatischen Polyisocyanaten.

Die besonders gute Eignung der erfindungsgemäßen Polyesterpolyole für die erfindungsgemäße Verwendung ist auf die erfindungswesentliche Auswahl der den Polyesterpolyolen zugrundeliegenden Ausgangsmaterialien und insbesondere deren Mengenverhältnis zurückzuführen. Die erfindungswesentlichen Polyesterpolyole weisen Hydroxylzahlen innerhalb des Bereichs von 60 bis 400, vorzugsweise 80 bis 350 und besonders bevorzugt 100 bis 300, Säurezahlen innerhalb des Bereichs von 0,5 bis 80, vorzugsweise 0,5 bis 60 und besonders bevorzugt 0,5 bis 50 und ein mittleres, aus der Stöchiometrie der eingesetzten Ausgangsmaterialien unter Zugrundelegung einer theoretischen Säurezahl von 0 berechenbares Molekulargewicht von 500 bis 10.000, vorzugsweise 600 bis 5.000, auf. Die erfindungsgemäßen Polyesterpolyole sind hochviskose, nahezu farblose, klare Harze, die in Lacklösemitteln wie beispielsweise Kohlenwasserstoffen wie Toluol, Xylol oder höheren Alkylbenzolen, Estern wie Ethylacetat, Propylacetat, Butylacetat, Methylglykolacetat, Ethylglykolacetat, Methoxypropylacetat, Ketonen wie Aceton, Methylethylketon und Methylisobutylketon oder Gemischen dieser Lösemittel klar löslich sind.

Die Alkoholkomponente a) setzt sich aus den Einzelkomponenten a1), sowie gegebenenfalls a2) und/oder a3) zusammen.

Bei der Komponente a1) handelt es sich um höher als zweiwertige, aliphatische Alkohole mit 3 bis 8, vorzugsweise 3 bis 6 Kohlenstoffatomen, wie z.B. Glycerin, Trimethylolpropan, Pentaerythrit, Sorbit oder Gemische derartiger Alkohole.

Bei der Komponente a2) handelt es sich um zweiwertige, aliphatische oder cycloaliphatische Alkohole mit 2 bis 18 und insbesondere 2 bis 8 Kohlenstoffatomen, wie z. B. Ethylenglykol, Propandiol-1,2 und -1,3, Butandiol-1,3, -2,3, und -1,4, Pentandiol-1,5, 2,2-Di-ethyl-propandiol, Hexandiol-1,6 und -2,5, 2-Methyl-2,4-pentandiol, 3-Methyl-1,5-pentandiol, 2-Methyl-2-propyl-1,3-propandiol, 2,2-Diethyl-1,3-propandiol, 1,4-Cyclohexandimethanol, Cyclohexandiol-1,2, -1,3 und -1,4, 2,2-Bis(4-hydroxycyclohexyl)-propan und Octahydro-4,7-methano-1Hindendimethanol. Gemische derartiger Diole können ebenfalls als Komponente a2) verwendet werden.

Bei der Komponente a3) handelt es sich um einwertige, aliphatische oder cycloaliphatische Alkohole mit 1 bis 18, vorzugsweise 1 bis 12 und besonders bevorzugt 1 bis 9 Kohlenstoffatomen, wie z.B. Methanol, Ethanol, 1- und 2-Propanol, 1- und 2-Butanol, Isobutanol, tert.-Butanol, 1-, 2- und 3-Pentanol, 2-Methyl-1-butanol, 3-Methyl-1-butanol, 2,2-Dimethylpropanol, 1-, 2- und 3-Hexanol, 4-Methyl-2-pentanol, 2-Ethyl-1-butanol, 2,2-Dimethylpropanol, 1-Octanol, 2-Ethyl-1-hexanol, 1-Nonanol, Trimethyl-1-hexanol, 1-Decanol, 1-Dodecanol, 1-Tetradecanol, 1-Hexadecanol, 1-Octadecanol, Cyclohexanol, 2-, 3- und 4-Methylcyclohexanol, Hydroxymethylcyclohexan, 3,3,5-Trimethylcyclohexanol, 4-tert.-Butylcyclohexanol. Gemische derartiger Monoole sowie entsprechende Ethersauerstoff enthaltende Monoole, die jedoch nicht bevorzugt sind, können ebenfalls als Komponente a1) verwendet werden.

Die Carbonsäurekomponente b) setzt sich aus den Einzelbestandteilen b1), sowie gegebenenfalls b2) und/oder b3) zusammen.

Bei der Komponente b1) handelt es sich um Dicarbonsäuren, ausgewählt aus der Gruppe bestehend aus Fumarsäure, Maleinsäure und Itaconsäure, bzw. um Anhydride der letztgenannten beiden Säuren oder um Gemische derartiger Säuren bzw. Säureanhydride.

Bei der Komponente b2) handelt es sich um aliphatische oder cycloaliphatische, gesättigte oder ungesättigte Dicarbonsäuren mit mindestens 2 Kohlenstoffatomen, bzw. deren mögliche Anhydride, die von Itaconsäure, Maleinsäure, bzw. deren Anhydride, und Fumarsäure verschieden sind, wie z. B. Oxalsäure, Malonsäure, Dimethylmalonsäure, Bernsteinsäure, Bernsteinsäureanhydrid, Glutarsäure, Adipinsäure, Pimelinsäure, Korksäure, Azelainsäure, Hexahydrophthalsäure, Hexahydrophthalsäureanhydrid, Tetrahydrophthalsäure und Tetrahydophthalsäureanhydrid. Gemische derartiger Säuren bzw. Anhydride können selbstverständlich ebenfalls eingesetzt werden.

Bei der Komponente b3) handelt es sich um einwertige, aliphatische oder cycloaliphatische, gegebenenfalls ungesättigte, Carbonsäuren mit 1 bis 18, vorzugsweise 1 bis 12 und besonders bevorzugt 1 bis 8 Kohlenstoffatomen, wie z.B. Ameisensäure, Essigsäure, Propionsäure, Buttersäure, Isobuttersäure, Valeriansäure, 2-Methylbutansäure, 3-Methylbutansäure, 2,2-Dimethylpropansäure, 2-Ethylbutansäure, 2-Ethylhexansäure, Octansäure, Decansäure, Dodecansäure, Tetradecansäure, Hexadecansäure, Octadecansäure, Cyclohexancarbonsäure und Cyclohexensäure. Gemische sowie mögliche Anhydride dieser Säuren können ebenfalls als Komponente b3) eingesetzt werden.

Erfindungswesentlich ist die Mitverwendung der ungesättigten Aufbaukomponente b1), so daß in den erfindungsgemäßen Polyesterpolyolen mindestens 0,6 Gew.-%, vorzugsweise 2,0 bis 12,0 Gew.-% und besonders bevorzugt 3,0 bis 11,5 Gew.-% an über die Komponente b1) eingebauten olefinisch ungesättigten Doppelbindungen (berechnet als =C=C=, Molekulargewicht = 24) vorliegen. Weiterhin erfindungswesentlich ist die Mitverwendung von einwertigen Aufbaukomponenten a3) in einer Menge von mindestens 10 Mol-%, bezogen auf die Gesamtmenge der Komponente a) oder die Mitverwendung von einwertigen Aufbaukomponenten b3) in einer Menge von mindestens 10 Mol-%, bezogen auf die Gesamtmenge der Komponente b). Die gleichzeitige Mitverwendung von einwertigen Aufbaukomponenten a3) und b3) ist im Prinzip möglich, jedoch keinesfalls bevorzugt.

Bevorzugt sind Polyesterpolyole des Hydroxylzahlbereichs 80 bis 350, die durch Umsetzung von
a) 53,5 bis 65,8 Äquivalent-% einer Alkoholkomponente mit
b) 34,2 bis 46,5 Äquivalent-% einer Carbonsäurekomponente
hergestellt werden, wobei entweder
a) 30 bis 90 Mol-% Komponente a1), 0 bis 60 Mol-% Komponente a2) und 10 bis 50 Mol-% Komponente a3) und
b) 10 bis 100 Mol-% Komponente b1) und 0 bis 90 Mol-% Komponente b2),
oder
a) 30 bis 100 Mol-% Komponente a1), 0 bis 70 Mol-% Komponente a2) und
b) 10 bis 90 Mol-% Komponente b1), 0 bis 80 Mol-% Komponente b2) und 10 bis 50 Mol-% Komponente b3)
bei der Umsetzung von a) und b) zur Anwendung kommen, wobei sich die unter a) und b) bzw. a1) bis a3) und b1) bis b3) gemachten Prozentangaben jeweils zu 100 ergänzen.

Besonders bevorzugt sind Polyesterpolyole des Hydroxylzahlbereichs 100 bis 300, die durch Umsetzung von
a) 54,4 bis 63,4 Äquivalent-% einer Alkoholkomponente mit
b) 36,6 bis 45,6 Äquivalent-% einer Carbonsäurekomponente
hergestellt werden, wobei entweder
a) 35 bis 80 Mol-% Komponente a1), vorzugsweise Trimethylolpropan, Glycerin und/oder Pentaerythrit, 5 bis 45 Mol-% Komponente a2), vorzugsweise Neopentylglykol, 1,4-Cyclohexandimethanol und/oder 1,6-Hexandiol, sowie 15 bis 45 Mol-% Komponente a3), vorzugsweise Cyclohexanol und/oder 2-Ethylhexanol, und
b) 25 bis 100 Mol-% Komponente b1), vorzugsweise Maleinsäureanhydrid und 0 bis 75 Mol-% Komponente b2), vorzugsweise Bernsteinsäure, Tetrahydrophthalsäure, Hexahydrophthalsäure bzw. deren Anhydride und/oder Adipinsäure,
oder
a) 35 bis 95 Mol-% Komponente a1), vorzugsweise Trimethylolpropan, Glycerin und/oder Pentaerythrit, 5 bis 65 Mol-% Komponente a2), vorzugsweise Neopentylglykol, 1,4-Cyclohexandimethanol und/oder Hexandiol und
b) 20 bis 80 Mol-% Komponente b1), vorzugsweise Maleinsäureanhydrid, 5 bis 65 Mol-% Komponente b2), vorzugsweise Bernsteinsäure, Tetrahydrophthalsäure, Hexahydrophthalsäure bzw. deren Anhydride und/oder Adipinsäure und 15 bis 45 Mol-% Komponente b3), vorzugsweise Cyclohexansäure und/oder 2-Ethylhexansäure
bei der Umsetzung von a) und b) zur Anwendung kommen, wobei sich sowohl die unter a) und b) als auch die unter a1) bis a3) und b1) bis b3) gemachten Prozentangaben jeweils zu 100 ergänzen.

Die Herstellung der erfindungsgemäßen Polyesterpolyle erfolgt in an sich bekannter Weise nach Methoden wie sie beispielsweise in "Ullmanns Encyclopädie der Technischen Chemie", Verlag Chemie Weinheim, 4. Auflage (1980), Band 19, Seiten 61 ff. oder von H. Wagner und H. F. Sarx in "Lackkunstharze", Carl Hanser Verlag, München (1971), Seiten 86 bis 152 ausführlich beschrieben sind. Die Veresterung erfolgt gegebenenfalls in Gegenwart einer katalytischen Menge eines üblichen Veresterungskatalysators, wie z.B. Säuren, Basen oder Übergangsmetallverbindungen, wie z.B. Titantetrabutylat bei ca. 80 bis 260°C, vorzugsweise 100 bis 240°C. Die Veresterungsreaktion wird so lange durchgeführt, bis die angestrebten Werte für die Hydroxyl- und Säurezahl, bzw. für die Viskosität, erreicht sind.

Es ist prinzipiell jedoch auch möglich, den angestrebten Wert für die Säurezahl zu unterschreiten und durch anschließende Umsetzung des entstandenen Polyesters mit einem Dicarbonsäureanhydrid unter Halbesterbildung die gewünschte Säurezahl einzustellen. Geeignete Dicarbonsäureanhydride sind beispielsweise Maleinsäureanhydrid, Bernsteinsäureanhydrid, Tetrahydrophthalsäureanhydrid und Hexahydrophthalsäureanhydrid.

Bei der erfindungsgemäßen Verwendung der erfindungswesentlichen Polyesterpolyole werden diese gegebenenfalls in Abmischung mit anderen, aus der Polyurethanlacktechnologie bekannten, organischen Polyhydroxylverbindungen als Polyhydroxyl-Komponente eingesetzt. Bei diesen anderen Polyhydroxylverbindungen kann es sich um die üblichen (von den erfindungsgemäßen Polyesterpolyolen verschiedenen) Polyester-, Polyether-, Polycarbonat-, Polyurethan- oder Polyacrylatpolyole handeln. Vorzugsweise werden als weitere organische Polyhydroxylverbindungen, falls solche überhaupt neben den erfindungswesentlichen Polyesterpolyolen zum Einsatz gelangen, die an sich bekannten Polyacrylatpolyole des Standes der Technik eingesetzt.

Als Abmischkomponente geeignete Polyacrylatpolyole sind in Lacklösungsmitteln der bereits beispielhaft genannten Art lösliche Copolymerisate von Hydroxylgruppen aufweisenden Monomeren mit anderen olefinisch ungesättigten Monomeren, wie z.B. Butylacrylat, Methylmethacrylat, Styrol, Acrylsäure, Acrylnitril und/oder Methacrylnitril. Geeignete Hydroxylgruppen aufweisende Monomere sind insbesondere 2-Hydroxyethyl(meth)acrylat und das durch Anlagerung von Propylenoxid an Acrylsäure bzw. Methacrylsäure erhältliche Hydroxypropyl-(meth)acrylat-Isomerengemisch. Der Hydroxylgruppengehalt der in Betracht kommenden Polyacrylatpolyole liegt im allgemeinen zwischen 0,5 und 6 Gew.-% (bezogen auf Festharz).

Bei der erfindungsgemäßen Verwendung der erfindungswesentlichen Polyesterpolyole können diese in Abmischung mit bis zu 90, vorzugsweise bis zu 70 Hydroxyläquivalent-%, bezogen auf alle Polyhydroxylverbindungen, an anderen Polyolen der beispielhaft genannten Art zum Einsatz gelangen. Besonders bevorzugt werden jedoch die erfindungswesentlichen Polyesterpolyole als alleinige Polyol-Komponente bei der erfindungsgemäßen Verwendung eingesetzt.

Reaktionspartner für die Polyol-Komponente bei der erfindungsgemäßen Verwendung der erfindungswesentlichen Polyesterpolyole sind die üblichen "Lackpolyisocyanate", das heißt, vor allem die bekannten, Urethangruppen, Uretdiongruppen, Allophanatgruppen und insbesondere Biuretgruppen bzw. Isocyanuratgruppen aufweisenden Modifizierungsprodukte von einfachen Diisocyanaten, wie z.B. 1,6-Diisocyanatohexan, 1-Isocyanato-3,3,5-trimethyl-5-isocyanatomethylcyclohexan (Isophorondiisocyanat), 2,4-Diisocyanatocyclohexan und seine Gemische mit bis zu 35 Gew.-%, bezogen auf Gesamtgemisch, an 2,6-Diisocyanatocyclohexan, 2,4-Diisocyanatotoluol und seine Gemische mit bis zu 35 Gew.-%, bezogen auf Gesamtgemisch, an 2,6-Diisocyanatotoluol oder deren Gemische. Besonders bevorzugt werden die entsprechenden "Lackpolyisocyanate" mit aliphatisch und/oder cycloaliphatisch gebundenen Isocyanatgruppen eingesetzt.

Zu den Urethangruppen aufweisenden "Lackpolyisocyanaten" gehören z.B. die Umsetzungsprodukte von 2,4- und gegebenenfalls 2,6-Diisocyanatotoluol oder 2,4-und gegebenenfalls 2,6-Diisocyanatocyclohexan mit unterschüssigen Mengen an Trimethylolpropan, bzw. dessen Gemischen mit einfachen Diolen, wie z.B. den isomeren Propan- oder Butandiolen. Die Herstellung derartiger, Urethangruppen aufweisender Lackpolyisocyanate in praktisch monomerfreier Form ist beispielsweise in der DE-PS 1 090 196 beschrieben.

Zu den Biuretgruppen aufweisenden Lackpolyisocyanaten, die bei der erfindungsgemäßen Verwendung besonders bevorzugt sind, gehören insbesondere jene auf Basis von 1,6-Diisocyanatohexan, deren Herstellung beispielsweise in EP-B1-0 003 505, DE-PS 1 101 394, US-PS 3 358 010 oder US-PS 3 903 127 beschrieben ist.

Zu den ebenfalls bevorzugten, Isocyanuratgruppen aufweisenden Lackpolyisocyanaten gehören insbesondere die Trimerisate bzw. Mischtrimerisate der oben beispielhaft genannten Diisocyanate, wie z. B. die Isocyanuratgruppen aufweisenden Polyisocyanate auf Basis Diisocyanatotoluol gemäß GB-PS 1 060 430, GB-PS 1 506 373 oder GB-PS 1 485 564, die Mischtrimerisate von Diisocyanatotoluol mit 1,6-Diisocyanatohexan, die beispielsweise gemäß DE-PS 1 644 809 oder DE-OS 3 144 672 zugänglich sind, und insbesondere die aliphatischen bzw. die aliphatisch-cycloaliphatischen Trimerisate bzw. Mischtrimerisate auf Basis von 1,6-Diisocyanatohexan und/oder Isophorondiisocyanat, die beispielsweise gemäß US-PS 4 324 879, US-PS 4 288 586, DE-OS 3 100 262, DE-OS 3 100 263, DE-OS 3 033 860 oder DE-OS 3 144 672 zugänglich sind. Die bei der erfindungsgemäßen Verwendung zum Einsatz gelangenden Lackpolyisocyanate weisen im allgemeinen einen Isocyanatgehalt von 5 bis 25 Gew.-%, eine mittlere NCO-Funktionalität von 2,0 bis 5,0, vorzugsweise 2,8 bis 4,0 und einen Restgehalt an, zu ihrer Herstellung eingesetzten, monomeren Diisocyanaten von unter 2 Gew.-%, vorzugsweise unter 0,5 Gew.-% auf. Selbstverständlich können auch beliebige Gemische der beispielhaft genannten Lackpolyisocyanate zum Einsatz gelangen.

In den bei der erfindungsgemäßen Verwendung zum Einsatz gelangenden Zweikomponenten-Polyurethanlacken liegen die Polyolkomponente und die Polyisocyanatkomponente in einem Äquivalentverhältnis von Isocyanatgruppen zu Hydroxylgruppen von 5 : 1 bis 1: 2, vorzugsweise 1,5 : 1 bis 1 : 1,2 entsprechenden Mengen vor. Die durch Vermischen der beiden Komponenten erhaltenen Zweikomponenten-Bindemittel haben nur eine begrenzte Verarbeitungszeit von ca. 4 bis 24 Stunden und werden entweder als solche (lösungsmittelfreie Klarlacke), vorzugsweise jedoch unter Mitverwendung der üblichen Hilfs- und Zusatzmittel verarbeitet. Diese gegebenenfalls mitzuverwendenden Hilfs- und Zusatzmittel können entweder dem Gemisch oder den Einzelkomponenten vor deren Durchmischung hinzugefügt werden.

Als Hilfs- und Zusatzmittel kommen beispielsweise Lösungsmittel in Betracht, wie z.B. Ethylacetat, Butylacetat, Methoxypropylacetat, Methylethylketon, Methylisobutylketon, Toluol, Xylol, Testbenzin oder beliebige Gemische dieser Lösungsmittel.

Die Lösungsmittel werden in einer Menge von bis zu 70, vorzugsweise bis zu 50 Gew.-%, bezogen auf Gesamtgemisch, mitverwendet.

Weitere, gegebenenfalls mitzuverwendende Hilfs- und Zusatzmittel sind z.B. Weichmacher, wie z.B. Trikresylphosphat oder Phthalsäurediester, Chlorparaffine, Pigmente und Füllstoffe, wie Titandioxid, Bariumsulfat, Kreide, Ruß; Katalysatoren, wie z.B. N,N-Dimethylbenzylamin, N-Methylmorpholin, Zinkoctoat, Zinn-II-octoat oder Dibutylzinndilaurat; Verlaufsmittel; Verdickungsmittel, gegebenenfalls Stabilisatoren, wie substituierte Phenole, organofunktionelle Silane als Haftvermittler sowie Lichtschutzmittel und UV-Absorber. Derartige Lichtschutzmittel sind beispielsweise sterisch gehinderte Amine, wie sie z.B. in DE-OS 2 417 353 (= US-PS 4 123 418 und US-OS 4 110 304) und DE-OS 2 456 864 (= US-OS 3 993 655 und US-PS 4 221 701) beschrieben sind. Besonders bevorzugte Verbindungen sind: Bis-(1,2,2,6,6-pentamethylpiperidyl-4)-sebacat, Bis-(2,2,6,6-tetramethylpiperidyl-4)-sebacat, n-Butyl-(3,5-di-tert.-butyl-4-hydroxybenzyl)-malonsäure-bis-(1,2,2,6,6-pentamethylpiperidyl-4)-ester.

Die den Füllstoffen und Pigmenten anhaftende Feuchtigkeit kann durch vorhergehende Trocknung oder durch Mitverwendung von wasseraufnehmenden Stoffen, wie z. B. Molekularsieb-Zeolithen, entfernt werden.

Die Trocknung, der bei der erfindungsgemäßen Verwendung resultierenden Lackfilme kann bei Raumtemperatur erfolgen und bedarf keiner Temperaturerhöhung, um die eingangs erwähnten, optimalen Eigenschaften zu erreichen. Bei Anwendung der Bindemittel als Reparaturlack ist jedoch oftmals eine Temperaturerhöhung auf ca. 60 bis 100°C, vorzugsweise 60 bis 80°C, während eines Zeitraumes von 20 bis 60 Minuten empfehlenswert, um die Trocknungs- und Härtungszeit zu verkürzen.

Die erfindungsgemäß zum Einsatz gelangenden Lacke eignen sich vor allem für die Lackierung von Großfahrzeugen, wie z.B. Flugzeuge, Eisenbahn- und Straßenbahnwaggons, LKW-Aufbauten und dgl. Ein weiteres bevorzugtes Einsatzgebiet besteht in ihrer Verwendung als Autoreparaturlack. Weiterhin geeignet sind die Lacke für Korrosionsschutzanwendungen, wie z.B. Brücken und Strommasten und für die Holzlackierung.

Die besonderen Vorteile der erfindungsgemäß zum Einsatz kommenden Lacke liegen bei ausreichend langer Standzeit in ihrer schnellen Trocknung bei Raumtemperatur, wobei schon nach 1 bis 2 Tagen die hohe Endhärte der Lackfilme erreicht ist, in ihrer besonders guten Beständigkeit gegen die Einwirkung von Lösemitteln und Chemikalien, in ihrer Licht- und Wetterbeständigkeit bei guter Glanzhaltung und letztendlich in der gegenüber dem Stand der Technik hervorragenden Vergilbungsbeständigkeit bei Bestrahlung mit Licht niedriger Wellenlänge, z.B. kurzwelligem UV-Licht.

Die erfindungsgemäß zum Einsatz gelangenden Lacke können selbstverständlich nach allen üblichen Methoden der Lacktechnologie, wie z.B. Streichen, Spritzen oder Tauchen auf die zu beschichtenden Substrate aufgetragen werden. Die erfindungsgemäßen Lacke eignen sich sowohl zur Herstellung von Grundierungen als auch zur Herstellung von Zwischenschichten und insbesondere zur Herstellung von Deckschichten auf den zu lackierenden Substraten.

Die nachfolgenden Beispiele dienen zur weiteren Erläuterung der Erfindung. Alle Prozentangaben beziehen sich, falls nichts anderslautendes vermerkt, auf das Gewicht.

### Allgemeine Herstellvorschrift für die erfindungswesentlichen Polyesterpolyole

### 1. Polyester mit Monoolen a3)

Dicarbonsäureanhydride und Monoole werden in einem Reaktor, der mit Rührer, Heizung, automatischer Temperatursteuerung, Stickstoffeinleitung, Kolonne, Wasserabscheider und Vorlage ausgerüstet ist, eingewogen und auf 100 bis 150°C erhitzt, wobei ein Stickstoffstrom durch die Rohstoffmischung geleitet wird. Nach 3-stündigem Rühren bei 100 bis 150°C werden die restlichen Polyesterkomponenten zugegeben und unter Rühren und Durchleiten von Stickstoff auf 160 bis 200°C aufgeheizt. Dabei wird das Reaktionswasser und ggf. Monool abdestilliert. Abgeschiedenes Monool wird in den Reaktor zurückgeführt. Nach beendeter Destillation wird der Wasserabscheider durch eine Destillationsbrücke ersetzt und bei 160 bis 200°C so lange gerührt, bis die Kopftemperatur der Kolonne auf unter 90°C absinkt. Die Kolonne wird entfernt und mit erhöhtem Stickstoffstrom bis zu der gewünschten Säurezahl bzw. Viskosität auskondensiert. Ggf. nicht abreagierter Monoalkohol wird abdestilliert.

### 2. Polyester mit Monocarbonsäuren b3)

Alle Rohstoffe werden zusammen in einen wie oben beschriebenen Reaktor eingewogen und unter Rühren und Durchleiten von Stickstoff auf 160 bis 200°C aufgeheizt. Dabei wird das Reaktionswasser und ggf. Monocarbonsäure abdestilliert. Die Monocarbonsäure wird in den Reaktor zurückgeführt. Nach beendeter Destillation wird der Wasserabscheider durch eine Destillationsbrücke ersetzt und bei 160 bis 200°C so lange gerührt, bis die Kopftemperatur der Kolonne auf unter 90°C absinkt. Die Kolonne wird entfernt und mit erhöhtem Stickstoffstrom bis zu der gewünschten Säurezahl bzw. Viskosität auskondensiert. Ggf. nicht abreagierte Monocarbonsäure wird abdestilliert.

Die Zusammensetzung und die Daten der einzelnen, auf diesem Wege hergestellten Polyester bzw. Polyesterpolyacrylate sind in den Beispielen 1 bis 11 angegeben. Die gemachten Mengenangaben in "Mol" beziehen sich, wie aus den Gewichtsangaben in "g" ersichtlich ist, nicht auf die tatsächliche Anzahl der jeweiligen "Mole", sondern auf das Molverhältnis. Die Zahlenangaben bezüglich der Hydroxyl- und Säurezahlen beziehen sich auf "mg KOH/g".

### Beispiel 1 (erfindungsgemäß)

| Polyester aus | Einwaage |
|---|---|
| 2,05 Mol Cyclohexanol | 615 g |
| 3,83 Mol Trimethylolpropan | 1539 g |
| 1,18 Mol Neopentylglykol | 369 g |
| 1,86 Mol Maleinsäureanhydrid | 546 g |
| 3,81 Mol Tetrahydrophthalsäureanhydrid | 1737 g |

| | |
|---|---|
| Hydroxylzahl | 178 |
| Säurezahl | 17,1 |

### Beispiel 2 (erfindungsgemäß)

| Polyester aus | Einwaage |
|---|---|
| 2,20 Mol Cyclohexanol | 660 g |
| 4,10 Mol Trimethylolpropan | 1647 g |
| 1,25 Mol Neopentylglykol | 390 g |
| 4,00 Mol Maleinsäureanhydrid | 1188 g |
| 2,00 Mol Hexahydrophthalsäureanhydrid | 945 g |

| | |
|---|---|
| Hydroxylzahl | 178 |
| Säurezahl | 13,8 |

### Beispiel 3 (erfindungsgemäß)

| Polyester aus | Einwaage |
|---|---|
| 2,86 Mol Cyclohexanol | 860 g |
| 4,10 Mol Trimethylolpropan | 1650 g |
| 1,27 Mol Neopentylglykol | 395 g |
| 5,59 Mol Maleinsäureanhydrid | 1644 g |
| 0,62 Mol Hexahydrophthalsäureanhydrid | 287 g |

| | |
|---|---|
| Hydroxylzahl | 168 |
| Säurezahl | 14,9 |

### Beispiel 4 (erfindungsgemäß)

| Polyester aus | Einwaage |
|---|---|
| 4,78 Mol Trimethylolpropan | 1920 g |
| 1,49 Mol Neopentylglykol | 465 g |
| 2,41 Mol Cyclohexansäure | 924 g |
| 1,02 Mol Adipinsäure | 447 g |
| 4,09 Mol Maleinsäureanhydrid | 1203 g |

| | |
|---|---|
| Hydroxylzahl | 157 |
| Säurezahl | 2,8 |

### Beispiel 5 (erfindungsgemäß)

| Polyester aus | Einwaage |
|---|---|
| 4,49 Mol Trimethylolpropan | 1803 g |
| 1,38 Mol Neopentylglykol | 432 g |
| 2,41 Mol Cyclohexansäure | 924 g |
| 2,29 Mol Maleinsäureanhydrid | 672 g |
| 2,29 Mol Tetrahydrophthalsäureanhydrid | 1044 g |

| | |
|---|---|
| Hydroxylzahl | 159 |
| Säurezahl | 7,7 |

### Beispiel 6 (erfindungsgemäß)

| Polyester aus | Einwaage |
|---|---|
| 4,70 Mol Trimethylolpropan | 1890 g |
| 1,47 Mol Neopentylglykol | 459 g |
| 1,19 Mol Cyclohexansäure | 456 g |
| 1,19 Mol 2-Ethylhexansäure | 513 g |
| 4,33 Mol Maleinsäureanhydrid | 1272 g |
| 0,66 Mol Hexahydrophthalsäureanhydrid | 306 g |

| | |
|---|---|
| Hydroxylzahl | 173 |
| Säurezahl | 5,3 |

### Beispiel 7 (erfindungsgemäß)

| Polyester aus | Einwaage |
|---|---|
| 4,81 Mol Trimethylolpropan | 1935 g |
| 1,51 Mol Neopentylglykol | 471 g |
| 1,19 Mol Cyclohexansäure | 456 g |
| 1,19 Mol 2-Ethylhexansäure | 513 g |
| 5,21 Mol Maleinsäureanhydrid | 1533 g |

| | |
|---|---|
| Hydroxylzahl | 169 |
| Säurezahl | 5,3 |

### Beispiel 8 (erfindungsgemäß)

| Polyester aus | Einwaage |
|---|---|
| 4,54 Mol Trimethylolpropan | 1827 g |
| 1,41 Mol Neopentylglykol | 441 g |
| 2,35 Mol 2-Ethylhexansäure | 1014 g |
| 3,47 Mol Maleinsäureanhydrid | 1020 g |
| 1,25 Mol Hexahydrophthalsäureanhydrid | 579 g |

| | |
|---|---|
| Hydroxylzahl | 162 |
| Säurezahl | 4,8 |

### Beispiel 9 (erfindungsgemäß)

Mischung aus 60 Gew.-Teilen eines hydroxyfunktionellen Polyacrylats aus 41,95 Gew.-% Styrol, 32,53 Gew.-% Hydroxyethylmethacrylat, 24,57 Gew.-% Butylacrylat und 0,95 Gew.-% Acrylsäure und 40 Gew.-Teilen des Polyesters aus Beispiel 3.

| | |
|---|---|
| Hydroxylzahl | 157 |
| Säurezahl | 11,5 |

### Beispiel 10 (Vergleich)

| Polyester aus | Einwaage |
|---|---|
| 2,50 Mol Trimethylolpropan | 1950 g |
| 1,65 Mol Phthalsäureanhydrid | 1420 g |
| 0,60 Mol Adipinsäure | 512 g |
| 1,15 Mol 2-Ethylhexansäure | 966 g |
| 0,16 Mol Maleinsäureanhydrid | 87 g |

| | |
|---|---|
| Hydroxylzahl | 167 |
| Säurezahl | 14,7 |

### Beispiel 11 (Vergleich)

Mischung aus 60 Gew.-Teilen des Polyacrylatpolyols aus Beispiel 9 und 40 Gew.-Teilen des Polyesters aus Beispiel 10.

| | |
|---|---|
| Hydroxylzahl | 155 |
| Säurezahl | 11,3 |

### Beispiel 12 (Verwendung)

Dieses Beispiel beschreibt die Herstellung gebrauchsfertiger Lacke auf Basis der Polyesterpolyole gemäß Beispiel 1 bis 8 und 10 sowie der Polyolgemische gemäß Beispiel 9 und 11, deren Applikation und die Prüfung der resultierenden Lackfilme.

Zur Beurteilung der allgemeinen Lackeigenschaften wurden Weißlacke hergestellt; dazu wurden die Polyole aus den Beispielen 1 bis 11 mit verschiedenen Zusätzen sowie Weißpigment versehen und auf einem Schüttelbock ("Red Devil") angerieben.

Anschließend wurde mit einem Lackpolyisocyanat versetzt, wobei ein NCO/OH-Verhältnis von ca. 1 : 1 eingehalten wurde. Als "Lackpolyisocyanat" diente ein Isocyanuratgruppen enthaltendes Polyisocyanat auf Basis 1,6-Diisocyanatohexan, 90%ig gelöst in Butylacetat/Solventnaphtha 100 (Volumenverhältnis 1: 1), NCO-Gehalt der Lösung: ca. 19,4 Gew.-%, Gehalt der Lösung an freiem 1,6-Diisocyanatohexan: unter 0,5 %.

Bezogen auf Festharz (Summe der festen Anteile an Polyol und Polyisocyanat) wurden folgende Anteile an Zusatzstoffen verwendet:

**Tabelle 1**

| Bestandteile | Gew.-% fest auf fest |
|---|---|
| ®Desmorapid PP (PUR-Katalysator der Bayer AG, 10%ig in MPA) | 0,3 |
| | |
| ®Tinuvin 292 (Lichtschutzmittel der Fa. Ciba Geigy, Basel, 10%ig in Xylol) | 1,0 |
| | |
| Titandioxid (®Bayertitan R-KB-4 der Bayer AG) | 80,0 |
| | |
| ®Bentone 38 (Antiabsetzmittel der Fa. Kronos GmbH, Leverkusen, 10%iger Aufschluß in Solvesso 100/Antiterra U 85:5) | 0,7 |
| | |
| ®Baysilone-Öl OL 17 (Verlaufsmittel der Bayer AG, 10%ig in MPA) | 0,1 |

Als Lösemittel wurde ein Gemisch aus Methoxypropylacetat (MPA), Xylol und n-Butylacetat (6 : 1 : 3) verwendet, es wurde verdünnt bis auf einen Gehalt von:
ca. 30 Gew.-% Bindemittel,
ca. 24 Gew.-% Pigment,
ca. 0,6 Gew.-% Additive,
ca. 45 Gew.-% Lösemittel.

Die Auslaufzeit (DIN 53211; 4-mm-Düse) betrug ca. 18 Sekunden. Damit sind die Lacke spritzfertig eingestellt.

Die Lacke wurden auf Glasplatten aufgezogen (Schichtdicke ca. 100 um Naßfilm), sowohl bei Raumtemperatur als auch 30 Minuten bei 60°C getrocknet, wobei die Trocknungsgeschwindigkeit (DIN 53 150) ermittelt wurde, und dann 7 Tage bei Raumtemperatur gelagert. Die Trockenfilmdicke betrug ca. 50 µm.

Anschließend wurde die Härte nach König (DIN 53 157), der Glanz nach Gardner im 60°-Winkel (DIN 67 530), die Anlösbarkeit durch Superbenzin (nach 3 Tagen Lagerung bei Raumtemperatur) und die Erichsentiefung geprüft. Außerdem wurde die Vergilbungsresistenz bei Bestrahlung mit kurzwelligem UV-Licht im QUV-Test (QUV-Accelerated Weathering Tester, ASTM G 53-77) geprüft. Hierzu wurden auf Aluminiumbleche (68 mm x 150 mm), die zuvor grundiert und mit weißem Basislack beschichtet wurden, Klarlacke auf Basis der Polyole der Beispiele 1 bis 11 appliziert. Zur Herstellung derselben wurde in der Formulierung der Tabelle 1 der Anteil an Titandioxid und ®Bentone weggelassen und mittels Lösergemisch auf ca. 43 % Festkörpergehalt eingestellt. Nach Aufspritzen und Trocknen der Lacke (30 Minuten bei 60°C) wurden diese 7 Tage bei Raumtemperatur gelagert und anschließend im QUV-Gerät (Fa. Q-Panel Company) geprüft. Dabei wurde im Zyklus jeweils 4 h mit intensivem, ungefiltertem UV-Licht im Wellenlängenbereich von ca. 280 bis 370 nm (Maximum bei 313 nm) bestrahlt bzw. 4 h im Dunkeln belassen, bei einer Gesamtdauer von 1000 h. Nach dem Abwaschen der Probe wurde mittels eines Farbmeßgerätes die Gesamtfarbdifferenz ΔE (gegenüber der nicht bewitterten Platte) als Maß für die aufgetretene Vergilbung bestimmt.

Die Prüfergebnisse von Lacken auf Basis der Beispiele 1 bis 11 sind in Tabelle 2 dargestellt.

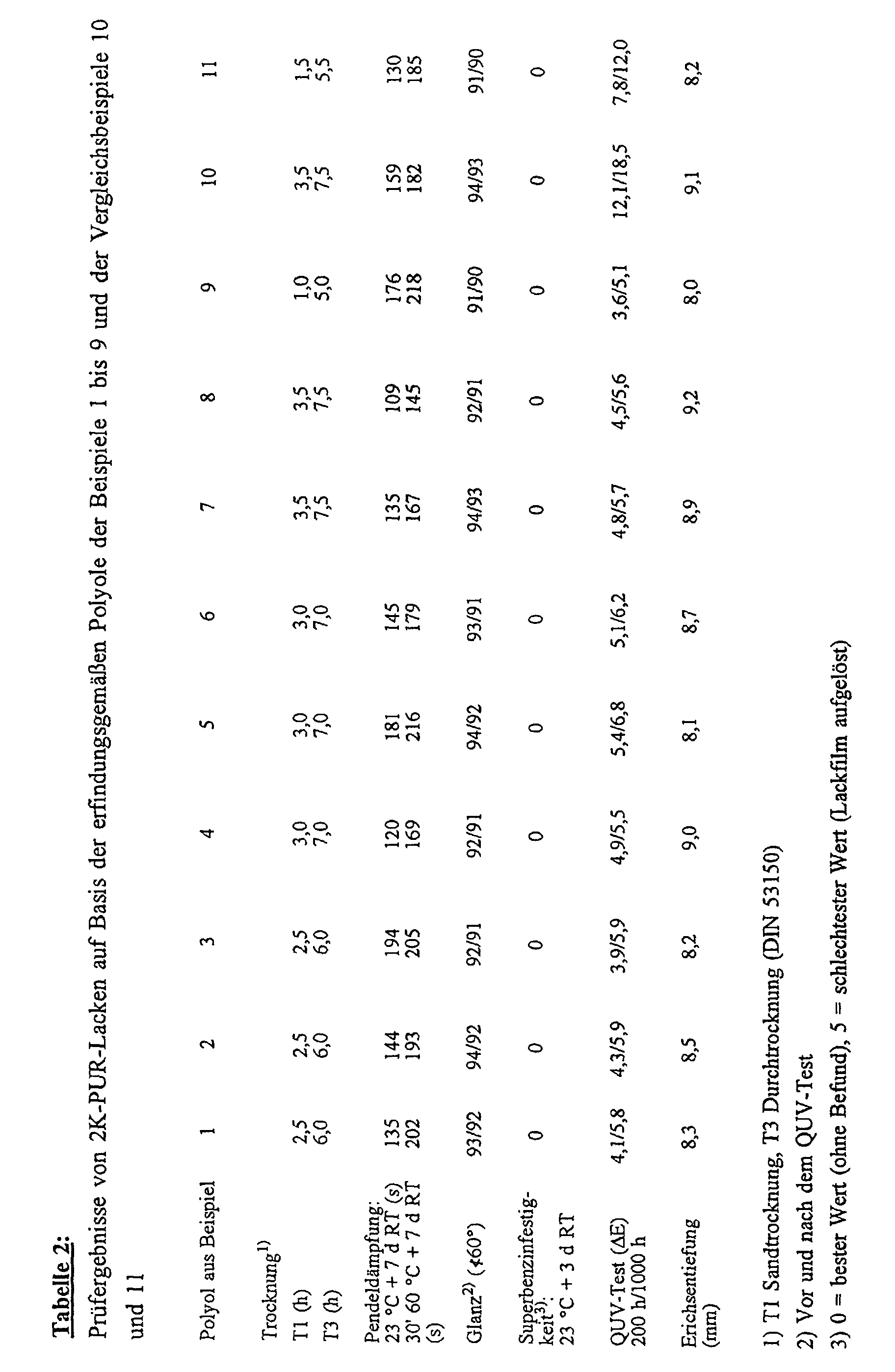

### Diskussion der Resultate

2K-PUR-Lacke auf Basis der Polyole aus den Beispielen 1 bis 11 haben nach schneller Trocknung eine hohe Pendelhärte, sind hochglänzend, elastisch und beständig gegen die Einwirkung von Superbenzin. Die Ergebnisse der Farbmessungen machen insbesondere die ausgezeichnete UV-Beständigkeit der erfindungsgemäßen Lacke der Beispiele 1 bis 9 im Vergleich zu den Vergleichsbeispielen 10 und 11 deutlich.

## Patentansprüche

1. Polyesterpolyole des Hydroxylzahlbereichs 60 bis 400, die Veresterungsprodukte von
a) einer Alkoholkomponente, bestehend aus
a1) einer Polyolkomponente, bestehend aus mindestens einem aliphatischen oder cycloaliphatischen, mindestens dreiwertigen Alkohol mit 3 bis 8 Kohlenstoffatomen, gegebenenfalls
a2) einer Diolkomponente, bestehend aus mindestens einem zweiwertigen, aliphatischen oder cycloaliphatischen Alkohol mit 2 bis 18 Kohlenstoffatomen und gegebenenfalls
a3) einer Monoolkomponente, bestehend aus mindestens einem einwertigen, aliphatischen oder cycloaliphatischen, gegebenenfalls ungesättigten Alkohol mit 1 bis 18 Kohlenstoffatomen,
mit
b) einer Carbonsäurekomponente, bestehend aus
b1) einer Dicarbonsäurekomponente, bestehend aus Itaconsäure, Maleinsäure, bzw. deren Anhydride, Fumarsäure oder Gemischen davon, so daß in den Polyesterpolyolen mindestens 0,6 gew% an über die Komponente b1) eingebauten olefinisch ungesättigte Doppelbindungen vorliegen, gegebenenfalls
b2) einer Dicarbonsäurekomponente, bestehend aus mindestens einer aliphatischen oder cycloaliphatischen, gesättigten oder ungesättigten Dicarbonsäure mit mindestens 2 Kohlenstoffatomen, bzw. deren möglichem Anhydrid, die von Itaconsäure, Maleinsäure, bzw. deren Anhydride und Fumarsäure verschieden ist und gegebenenfalls
b3) einer Monocarbonsäurekomponente, bestehend aus mindestens einer aliphatischen oder cycloaliphatischen, gegebenenfalls ungesättigten, Monocarbonsäure mit 1 bis 12 Kohlenstoffatomen und/oder mindestens einem möglichen Anhydrid einer derartigen Säure
darstellen, **dadurch gekennzeichnet, daß** bei der Veresterungsreaktion einwertige Aufbaukomponenten a3) in einer Menge von mindestens 10 Mol-%, bezogen auf die Gesamtmenge der Komponente a) oder einwertige Aufbaukomponenten b3) in einer Gesamtmenge von mindestens 10 Mol-%, bezogen auf die Gesamtmenge der Komponente b) mitverwendet worden sind.

2. Polyesterpolyole gemäß Anspruch 1 des Hydroxylzahlbereichs 80 bis 350, die Veresterungsprodukte von
a) 53,5 bis 65,8 Äquivalent-% einer Alkoholkomponente, bestehend aus 30 bis 90 Mol-% der Komponente a1), 0 bis 60 Mol-% der Komponente a2) und 10 bis 50 Mol-% der Komponente a3) mit
b) 34,2 bis 46,5 Äquivalent-% einer Carbonsäurekomponente, bestehend aus 10 bis 100 Mol-% der Komponente b1) und 0 bis 90 Mol-% der Komponente b2)
darstellen, wobei sich die unter a) und b) gemachten Prozentangaben jeweils zu 100 ergänzen.

3. Polyesterpolyole des Hydroxylzahlbereichs 80 bis 350 gemäß Anspruch 1, die Umsetzungsprodukte von
a) 53,5 bis 65,8 Äquivalent-% einer Alkoholkomponente, bestehend aus 30 bis 100 Mol-% der Komponente a1) und 0 bis 70 Mol-% der Komponente a2) mit
b) 34,2 bis 46,5 Äquivalent-% einer Carbonsäurekomponente, bestehend aus 10 bis 90 Mol-% der Komponente b1), 0 bis 80 Mol-% der Komponente b2) und 10 bis 50 Mol-% der Komponente b3)
darstellen, wobei sich die unter a) und b) gemachten Prozentangaben jeweils zu 100 ergänzen.

4. Verwendung der Polyesterpolyole gemäß Anspruch 1, gegebenenfalls in Abmischung mit anderen organischen Polyhydroxylverbindungen, als Bindemittelkomponente für Zweikomponenten-Polyurethanlacke, die Lackpolyisocyanate sowie gegebenenfalls die in der Polyurethantechnologie üblichen Hilfs- und Zusatzmittel enthalten.

5. Verwendung gemäß Anspruch 4, **dadurch gekennzeichnet, daß** die Polyesterpolyole in Abmischung mit bis zu 90 Hydroxyl-Äquivalent-%, bezogen auf alle Polyhydroxylverbindungen, an anderen Polyhydroxylverbindungen, ausgewählt aus der Gruppe bestehend aus Polyacrylatpolyolen, von den erfindungsgemäßen Polyesterpolyolen verschiedenen Polyesterpolyolen, Polycarbonatpolyolen, Urethangruppen aufweisenden Polyolen und Gemischen derartiger Polyole zum Einsatz gelangen.

6. Verwendung gemäß Anspruch 4 und 5 bei der Herstellung von Lacküberzügen auf Automobilen, Großfahrzeugen, zur Herstellung von Automobilen oder Großfahrzeugen eingesetzten Einzelteilen oder bei der Autoreparaturlackierung.

7. Bindemittelkombinationen, bestehend aus Polyesterpolyolen gemäß Anspruch 1 und aliphatischen und/oder cycloaliphatischen Polyisocyanaten.

## Claims

1. Polyester polyols of the hydroxyl number range 60 to 400, which are esterification products of
a) an alcohol component, consisting of
a1) a polyol component, consisting of at least one aliphatic or cycloaliphatic, at least trihydric alcohol with 3 to 8 carbon atoms, optionally
a2) a diol component, consisting of at least one dihydric, aliphatic or cycloaliphatic alcohol with 2 to 18 carbon atoms and optionally
a3) a monool component, consisting of at least one monohydric, aliphatic or cycloaliphatic, optionally unsaturated alcohol with 1 to 18 carbon atoms,
with
b) a carboxylic acid component, consisting of
b1) a dicarboxylic acid component, consisting of itaconic acid, maleic acid and/or their anhydrides, fumaric acid or mixtures thereof, such that at least 0.6 wt.% of olefinically unsaturated double bonds incorporated by way of the component b1) are present in the polyester polyols, optionally
b2) a dicarboxylic acid component, consisting of at least one aliphatic or cycloaliphatic, saturated or unsaturated dicarboxylic acid with at least 2 carbon atoms, and/or its possible anhydride, which is different from itaconic acid, maleic acid and/or their anhydrides and fumaric acid and optionally
b3) a monocarboxylic acid component, consisting of at least one aliphatic or cycloaliphatic, optionally unsaturated monocarboxylic acid with 1 to 12 carbon atoms and/or at least one possible anhydride of such an acid,
**characterized in that** in the esterification reaction, monohydric building components a3) were co-used in a quantity of at least 10 mol.%, related to the total quantity of the component a) or monocarboxy building components b3) were co-used in a total quantity of at least 10 mol.% related to the total quantity of the component b).

2. Polyester polyols according to Claim 1 of the hydroxyl number range 80 to 350, which are esterification products of
a) 53.5 to 65.8 equivalent.% of an alcohol component, consisting of 30 to 90 mol.% of the component a1), 0 to 60 mol.% of the component a2) and 10 to 50 mol.% of the component a3) with
b) 34.2 to 46.5 equivalent.% of a carboxylic acid component, consisting of 10 to 100 mol.% of the component b1) and 0 to 90 mol.% of the component b2), the percentages quoted under a) and b) adding up to 100 in each case.

3. Polyester polyols of the hydroxyl number range 80 to 350 according to Claim 1, which are reaction products of
a) 53.5 to 65.8 equivalent.% of an alcohol component, consisting of 30 to 100 mol.% of the component a1) and 0 to 70 mol.% of the component a2) with
b) 34.2 to 46.5 equivalent.% of a carboxylic acid component, consisting of 10 to 90 mol.% of the component b1), 0 to 80 mol.% of the component b2) and 10 to 50 mol.% of the component b3),
the percentages quoted under a) and b) adding up to 100 in each case.

4. Use of the polyester polyols according to Claim 1, optionally in a mixture with other organic polyhydroxyl compounds, as a binder component for two-component polyurethane lacquers which comprise lacquer polyisocyanates and optionally the auxiliary substances and additives common in polyurethane technology.

5. Use according to Claim 4, **characterized in that** the polyester polyols are used in a mixture with up to 90 hydroxyl equivalent.%, related to all the polyhydroxyl compounds, of other polyhydroxyl compounds, selected from the group consisting of polyacrylate polyols, polyester polyols different from the polyester polyols according to the invention, polycarbonate polyols, polyols having urethane groups and mixtures of such polyols.

6. Use according to Claims 4 and 5 in the manufacture of lacquer coatings for motor cars, heavy vehicles, individual components used in the manufacture of motor cars or heavy vehicles or in motor vehicle repair lacquering.

7. Binder combinations consisting of polyester polyols according to Claim 1 and aliphatic and/or cycloaliphatic polyisocyanates.

## Revendications

1. Polyester-polyols avec un intervalle de l'indice d'hydroxyle allant de 60 à 400, qui est le produit d'estérification de :
a) un composant alcool, consistant en :
a1) un composant polyol, consistant en au moins un alcool aliphatique ou cycloaliphatique, au moins trivalent ayant 3 à 8 atomes de carbone, le cas échéant
a2) un composant diol, consistant en au moins un alcool aliphatique ou cycloaliphatique, divalent ayant 2 à 18 atomes de carbone, et le cas échéant
a3) un composant monool, consistant en au moins un alcool aliphatique ou cycloaliphatique, monovalent, le cas échéant insaturé, ayant 1 à 18 atomes de carbone,
avec
b) un composant acide carboxylique, consistant en :
b1) un composant acide dicarboxylique, consistant en l'acide itaconique, l'acide maléique ou son anhydride, l'acide fumarique ou leurs mélanges, de sorte que dans le polyesterpolyol, il y ait au moins 0,6% en poids de doubles liaisons oléfiniquement insaturées incorporées par le composant b1), le cas échéant,
b2) un composant acide dicarboxylique, consistant en au moins un acide dicarboxylique aliphatique ou cycloaliphatique, saturé ou insaturé, ayant au moins deux atomes de carbone, ou son anhydride possible, qui est différent de l'acide itaconique, l'acide maléique ou son anhydride, et l'acide fumarique, et le cas échéant,
b3) un composant acide monocarboxylique, consistant en au moins un acide monocarboxylique aliphatique ou cycloaliphatique, le cas échéant insaturé, ayant 1 à 12 atomes de carbone et/ou au moins un anhydride possible d'un tel acide,
**caractérisé en ce que** lors de la réaction d'estérification, on utilise le composant a3) monovalent en une quantité d'au moins 10% en moles, sur base de la quantité totale du composant a) ou le composant b3) monovalent en une quantité totale d'au moins 10% en moles, sur base de la quantité totale du composant b).

2. Polyester-polyols suivant la revendication 1, avec un intervalle de l'indice d'hydroxyle allant de 80 à 350, qui est le produit d'estérification de :
a) 53,5 à 65,8% en équivalents d'un composant alcool, consistant en 30 à 90% en moles du composant a1), 0 à 60% en moles du composant a2) et 10 à 50% en moles du composant a3), avec
b) 34,2 à 46,5% en équivalents d'un composant acide carboxylique, consistant en 10 à 100% en moles du composant b1) et 0 à 90% en moles du composant b2),
où les pourcentages indiqués sous a) et b) se complètent chaque fois pour faire 100.

3. Polyester-polyols suivant la revendication 1, avec un intervalle de l'indice d'hydroxyle allant de 80 à 350, qui est le produit de réaction de :
a) 53,5 à 65,8% en équivalents d'un composant alcool, consistant en 30 à 100% en moles du composant a1) et 0 à 70% en moles du composant a2), avec
b) 34,2 à 46,5% en équivalents d'un composant acide carboxylique, consistant en 10 à 90% en moles du composant b1), 0 à 80% en moles du composant b2) et 10 à 50% en moles du composant b3),
où les pourcentages indiqués sous a) et b) se complètent chaque fois pour faire 100.

4. Utilisation des polyester-polyols suivant la revendication 1, le cas échéant en mélange avec d'autres composés polyhydroxylés organiques, comme composant liant pour des laques polyuréthanne à deux composants, qui contiennent des polyisocyantes de laque, ainsi que le cas échéant les auxiliaires et additifs usuels dans la technologie des polyuréthannes.

5. Utilisation suivant la revendication 4, **caractérisée en ce que** le polyesterpolyol est utilisé en mélange avec jusqu'à 90% en équivalents hydroxyle, sur base de tous les composés polyhydroxylés, d'autres composés polyhydroxylés, choisis parmi le groupe consistant en les polyacrylate-polyols, des polyester-polyols différents des polyester-polyols suivant l'invention, les polycarbonate-polyols, les polyols présentant des radicaux uréthanne, et les mélanges de tels polyols.

6. Utilisation suivant les revendications 4 et 5, pour la préparation de revêtements laques pour automobiles, poids-lourds, pour la préparation de pièces pour automobiles ou poids-lourds ou pour la peinture de réparation d'automobile.

7. Combinaisons de liant, consistant en des polyester-polyols suivant la revendication 1 et en des polyisocyanates aliphatiques et/ou cycloaliphatiques.
